Europäisches Patentamt

European Patent Office

Office européen des brevets

(11) Publication number: **0 383 706**

**A1**

# (12) EUROPEAN PATENT APPLICATION

(21) Application number: **90420083.9**

(51) Int. Cl.5: **C09K 5/00, C09K 3/18**

(22) Date of filing: **16.02.90**

(30) Priority: **16.02.89 US 311986**

(43) Date of publication of application:
**22.08.90 Bulletin 90/34**

(84) Designated Contracting States:
**AT CH DE FR GB IT LI SE**

(71) Applicant: **Gancy, Alan B.**
**265 Robineau Road**
**Syracuse, NY 13207(US)**

(72) Inventor: **Gancy, Alan B.**
**265 Robineau Road**
**Syracuse, NY 13207(US)**

(74) Representative: **Laurent, Michel et al**
**Cabinet LAURENT 20, rue Louis Chirpaz B.P. 32**
**F-69131 Ecully Cédex(FR)**

(54) **Novel anti-icing/deicing compositions and method for their manufacture.**

(57) The invention relates to a novel deicing/anti-icing agents comprising magnesium acetate, methanol and water, namely in liquid form.

The invention relates to a process for manufacturing such product which comprises neutralizing acetic acid with active MgO in a medium of methanol/water.

A – 100% $MgAc_2$

B – 100% $H_2O$

C – 100% MeOH

REGION I'

EP 0 383 706 A1

# NOVEL ANTI-ICING/DEICING COMPOSITIONS AND METHOD FOR THEIR MANUFACTURE

## Background of the Invention

Over the past five years new, relatively non-corrosive and non-polluting road and airport runway deicers have been developed in the form of magnesium calcium acetate pellets. However, there has developed a demand for deicers/anti-icers in the form of liquids. For example, airports throughout the U.S. have used ethylene glycol or aqueous solutions thereof as an effective anti-icer on airport runways. Under some circumstances they find liquids preferable to solids, even though they also use (solid) urea on runways. Ethylene glycol and urea are the only chemical agents approved for runway use in the U.S. Urea is used at airports around the world, although ethylene glycol is proscribed in some jurisdictions, e.g., Canada and West Germany.

Ethylene glycol is considered environmentally undesirable in the U.S. and many schemes have been propounded and variously used to collect the runoff from airport runways. Currently, an alternative, safer anti-icer liquid is not available. Urea is also undesirable for reasons of corrosion of aircraft construction metals, and for environmental reasons. A safer liquid formulation could supplant both ethylene glycol and urea for airport runway use.

Liquids can potentially replace a portion of the solid deicers currently in use for highway and institutional markets. Such a need has not been filled by ethylene glycol because of its expense and its environmental unacceptability. Where it has been tested, it has been found to result in slippery road or bridge surfaces.

The present invention takes advantage of the favorable properties conferred upon liquid deicers through the use of a methanol component, and through use of a magnesium acetate/water component. The broadest claimed composition of matter contains particular percentages of magnesium acetate, water, and methanol. The system magnesium acetate/methanol will not be considered further because of the limited solubility of magnesium acetate in this anhydrous system.

The invention is not limited to liquids, but may include compositions which form slurries.

## Description of Prior Art

Methanol is potentially one of the best, if not the best candidate material for a deicer/anti-icer known. It is relatively cheap and abundant, costing approximately 20% of the price of ethylene glycol, or less. Furthermore, it has a low molecular weight of 32, and thus an osmolar weight of 32. This means a lower dosage requirement than for most candidate deicers excepting sodium chloride whose osmolar weight is 29. Methanol is miscible with water in all proportions. Its most spectacular feature is its eutectic temperature with water, which is -125°C. Methanol was used as an automobile engine coolant for years, but has been displaced by ethylene glycol which has a much lower evaporation rate in today's high temperature engines.

Indeed, evaporation rate has been one of the drawbacks to methanol's use as a surface deicer/anti-icer. If this problem could be mitigated so as to enhance its ice-melting ability, the fundamental high vapor pressure of methanol could work to its advantage in minimizing its concentration in runoff and consequently, its contribution to biological oxygen demand (BOD).

Whereas methanol is flammable, its flash point is relatively high at around 16°C (compared to gasoline whose flash point is -46°C, for example). When diluted with water as inevitably occurs during ice-melting, its flash point rises to above room temperature and beyond. Furthermore, methanol fires can be extinguished with water, by contrast to gasoline. Pockets of high methanol vapor are unlikely to occur because its vapor density is only slightly above that of air. Hence, methanol flammability is not really a problem in its application to deicing, although anything which can be done to minimize this tendency is to the good.

Methanol has a low viscosity, and tends to splash undesirably during handling and application. It spreads to thin layers, which accelerates its evaporation.

Possibly its major drawback is methanol's low liquid density (sp.gr. = 0.792, 20°/4°C). When applied to ice it tends to sit immobile atop the ice, mixing only by diffusion. This results in extremely low ice-melting rates. Even for methanol/water blends, the specific gravity will always be less than unity, and ice-melting will be correspondingly slowed.

As with all substances, methanol has its toxic limits. According to recent studies, no ill effects have been found upon prolonged exposure to low concentrations, or to short intermittent exposures to high concentrations of its vapors. Methanol has now been cleared as a food additive.

If somehow the above-enumerated drawbacks associated with methanol's physical and physiochemical properties can be favorably altered, the result would be an extremely important advance in chemical deicing. The present invention is a realization of that favorable alteration.

On the positive side, methanol exhibits a relatively high heat of mixing with water. This supplies heat to the site of application, which goes above and beyond the normal chemical heat-pump effect, thereby accelerating the ice-melting rate. This phenomenon may be responsible for the well known fact that when methanol is applied to water-ice, a "cracking" sound is heard, and the ice drops dramatically in strength.

## Objects of the Invention

One object of the invention is to produce for commerce effective, relatively non-polluting anti-icers/deicers based upon cheap and abundant methyl alcohol.

Another object of the invention is to provide an economical chemical process for producing methanol-based deicers.

Yet another object is to realize methanol-based deicers which have a specific gravity greater than 1.00 at all practical ice-melting temperatures.

It is a further object to produce higher-viscosity deicers containing methanol.

It is yet another object of the invention to provide methanol-based deicers with significantly reduced evaporation rate.

Another object is to provide methanol-based deicers with reduced flammability, and with fire-retardant properties.

It is a further objective of the invention to provide anti-icers/deicers which are effective at relatively low temperatures, viz, below -20°C.

## Summary of the Invention

One class of deicing liquids is produced by reacting an active MgO-containing ore with acetic acid in an aqueous methanol medium. The result is a relatively viscous, concentrated solution of magnesium acetate in aqueous methanol. The viscosity of these liquids increases dramatically in going from room temperature to the practical ice temperatures during application. The viscosity increase over that of alcohol/water systems is apparently due to the formation of polymeric aggregates of magnesium acetate in water.

A minimum amount of water is required to achieve a practical solubility of magnesium acetate in the aqueous methanol system. More water can be added to the formulation as desired. This has the desirable effect of reducing the vapor pressure of methanol over these deicer liquids, thereby reducing evaporation rate and increasing the flash point. Dilution with water, when carried too far, undesirably raises the eutectic temperature of an ice/deicer system. Besides, it calls for greater application rates (due to dilution with water) to achieve a given deicing effect. Formulations containing lower water and/or methanol concentrations are in the form of slurries.

A typical formulation sets x equal to 3 and and y equal to 4 in the following reaction formula:
$$MgO + 2\,HAc + xH_2O + yCH_3OH \rightarrow Mg(Ac)_2 \cdot (1+x)H_2O \cdot yCH_3OH.$$

In all cases, the amount of water included in the formulation depends upon the desired balance between economy and effectiveness. But, in any event, a certain minimum amount of water is necessary to ensure complete magnesium acetate solubility in the liquid. However, the invention is not restricted to compositions which are liquid, but may include slurries.

Many formulations of the present invention have densities greater than that of ice. However, those with densities less than that of ice will not be excluded. The reason is that under certain prevailing conditions they can also be effective ice melters, e.g., where the system is disturbed by pedestrian or vehicular traffic.

In a first deicing/anti-icing prefered formulation the agents' compositions fall within the planar triangular diagram (tetrahedral) region bounded by straight lines connecting the following compositional points :

|  | % Mg(Ac)$_2$ | % H$_2$0 | % of Methanol |
|---|---|---|---|
| Point 1 | ~ 9.0 | ~ 4.5 | ~86.9 |
| Point 2 | ~52.5 | ~19.4 | ~28.1 |
| Point 3 | ~ 6.9 | ~90.0 | ~ 3.2 |
| Point 4 | ~49.8 | ~46.9 | ~ 3.2 |

In one another prefered formulation the agents' compositions fall within the planar triangular diagram (triangular) region bounded by straight lines connecting the following compositional points :

|  | % Mg(Ac)$_2$ | % H$_2$0 | % of Methanol |
|---|---|---|---|
| Point 1 | ~ 9.0 | ~ 4.5 | ~86.9 |
| Point 2 | ~51.5 | ~26.1 | ~22.2 |
| Point 3 | ~ 6.9 | ~90.0 | ~ 3.2 |

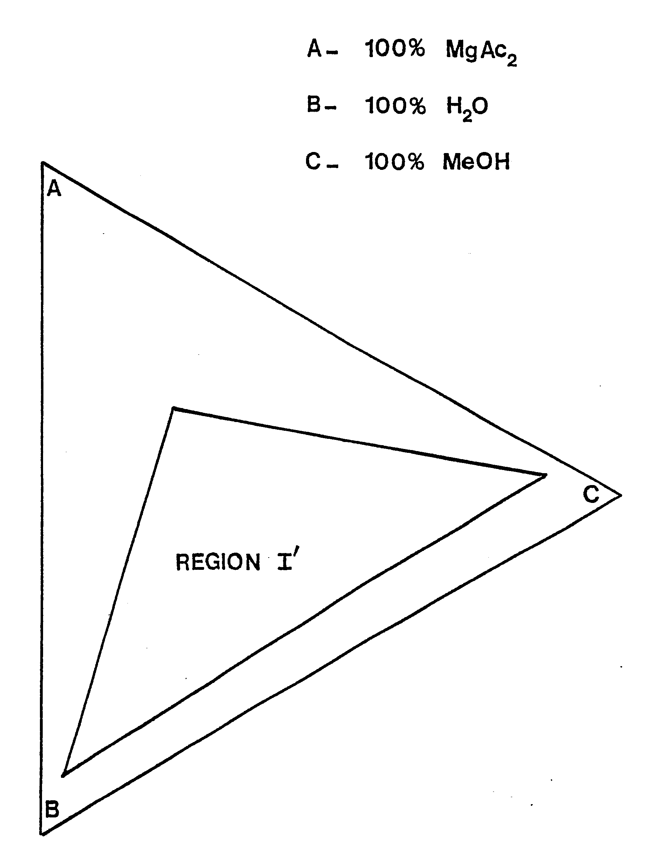

Figure 1 shows such planar triangular diagram.

## Discussion

In the Mg(A)$_2$/H$_2$0/Methanol liquid system, I have discovered critical limitations on the amounts of water and methanol in proportion of that of the acetate. Thus, if there are less than 4 moles of water per mol of magnesium acetate, solubility of the latter in aqueous methanol solutions drops off rapidly. Also, if the number of mols of methanol per mol of magnesium acetate tetrahydrate is 2 or below, the system viscosity becomes very high and the viscous solution has limited shelf life; i.e., crystals form in solution. Therefore, for the production of liquids rather than slurries, certain compositional boundaries must be respected, I have discovered. Relaxation of these boundaries can lead to slurries, which are an acceptable form of the deicers of this invention.

On the other hand, if the number of methanol mols per mol of magnesium acetate tetrahydrate are high - say, 5 or greater --, then the vapor pressure of methanol over such systems may become undesirably high. At the same time, of course, the cost of deicer diminishes. Hence, there is a practical balance which is arrived at through a consideration of economics as well as end-use conditions. As earlier stated, the deicers of the present invention are soluble in water, and considerably more water than the 4 mols mentioned can be worked into these liquids. Such dilution potentially raises the eutectic temperature of the ice/deicer system, and requires higher application rates for equivalent ice- melting. Again, the amount of water used in the formulation is arrived at by balancing economic and end-use demand factors. It should be added that in general, addition of water and/or methanol to the magnesium acetate deicer liquid tends to a.) decrease solution viscosity, b.) lower the specific gravity, and c.) increase the shelf life of the product. The essence of my invention is the discovery of practical ranges of these component concentrations to produce an economical and useful range of products.

Magnesium acetate is formed in situ by reacting an MgO-containing ore with aqueous acetic acid in a medium of methanol. Considerable heat is generated in this reaction, and this aids in the rate of dissolving of the salt. There is the option of supplying external heat to accelerate dissolution. When solution temperatures are brought to 50°-70°C, the dissolution of tetrahydrate is greatly accelerated. In practice, condensers are used to prevent acetic acid and alcohol from escaping the reactor.

Whenever acetic acid and an alcohol are combined there is the potential for the formation of the ester, or alcohol-acetate. I have discovered, however, that when the correct stoichiometric amount of active MgO is also present, the ester does not form. Rather, the acetate of magnesium is formed. This discovery greatly simplifies the manufacturing procedure, for without alcohol present as a reaction medium, the acid/MgO reaction would not go to completion.

The deicers of this invention can also be produced by combining magnesium acetate tetrahydrate with the appropriate alcohol. To this, further water can be added as desired. However, the tetrahydrate is relatively expensive. It is much more economical to produce magnesium acetate in situ. The mineral insolubles and other minor impurities introduced via the ore will remain in the deicer liquid product. Alternatively, insolubles may be filtered out of liquid deicers in a very simple and economical process step.

It should be pointed out that addition of magnesium acetate to the Methanol/Water system has the effect of desirably lowering the vapor pressure of methanol over the system. The extent of lowering depends upon the degree to which the acetate is dissociated into its component ions. Crude experiments comparing the flash points of certain Methanol/Water and Methanol/Water/Magnesium Acetate systems suggest that the magnesium acetate component is relatively undissociated. At the very worst, however, the acetate will act as a monomolecular entity which has a considerable effect in desirably lowering the partial pressure of methanol over the blend. Besides, addition of the acetate to the Methanol/Water system has at least 3 additional beneficial effects: 1.) It increases solution viscosity, 2.) It increases solution specific gravity, and 3.) It confers upon the solution excellent deicer/anti-icer properties, i.e., magnesium acetate is an excellent deicer in itself. A less obvious benefit is that magnesium acetate would normally have to be manufactured in pellet form to be useful; when it is now the component of a liquid or slurry agent, no pelletizing/drying is required, and this results in a considerable savings in manufacturing capital and operating cost as concerns the magnesium acetate component.

All chemical components of the 3-component system are ultimately biodegradable. Whereas methanol is the most volatile component, the magnesium acetate provides a more lasting deicing action. For example, under some circumstances aqueous magnesium acetate solution will remain on treated surfaces, to be available for counteracting the well-known re-freezing phenomenon. A key feature of the invention is my serendipitous discovery that a "skin" forms atop certain of the claimed formulations, when these formulations are applied to a pavement surface. This skin is dry to the touch, and constitutes a physical barrier which slows or arrests the evaporation of methanol from the puddle. This action greatly conserves methanol, making it now available to do the job for which it is intended, i.e., ice-melting, rather than escaping to the atmosphere. Flammability of the puddles is correspondingly reduced. The chemical composition of the skin is unknown, and probably contains $Mg(Ac)_2$ and water, and perhaps even some methanol. The skin typically forms under quiescent conditions following the evaporation of a small portion of the methanol in the original puddle. Presumably, then, its composition is poorer in methanol than the original deicer composition. I have proved that the skin is not the known stable form of magnesium acetate, viz., $Mg(Ac)_2 \cdot 4H_2O$. The skin is restricted to the agent/air interface presumably because the orientation of molecules at interfaces is known to be different from their orientation in the bulk interior.

## Detailed Description of the Preferred Embodiments

The following examples illustrate the key features, characteristics and embodiments pertaining to the invention:

## EXAMPLE I

## Specific Gravity of Deicer Liquids -Magnesium Acetate/Methanol/ Water

Solutions were prepared in sealed vessels by adding $Mg(Ac)_2 \cdot 4H_2O$ crystals to methanol, with warming to accelerate dissolving. When solution temperature had been restored to about 16°C, specific gravity was measured using calibrated hydrometers.

| Composition | Specific Gravity (16°/16°C) |
|---|---|
| $Mg(Ac)_2 \cdot 4H_2O \cdot 3CH_3OH$ | 1.155 |
| $Mg(Ac)_2 \cdot 4H_2O \cdot 4CH_3OH$ | 1.115 |

Both systems have a sp. gr. > 1.000, and are therefore expected to melt ice rapidly when applied atop the ice even under quiescent conditions.

## EXAMPLE II

Water-ice was allowed to form in sealed test tubes at -18°C, then equilibrated at -1°C. Deicer candidates were also separately equilibrated at -1°C. Sufficient deicer was then quickly applied atop the ice, in each case, to fully melt all the ice present. Deicer solutions were tinted using blue writing ink in order to facilitate observations.

| Results: | |
|---|---|
| Deicer | Time Required for Complete Ice Melting |
| Methanol (sp.gr. 0.792, 20°/4°C)<br>$Mg(Ac)_2.4H_2O.4CH_3OH$ | >14 hours<br><1 hour |

Illustrates the extremely low rate of ice melting when deicer sp. gr. is appreciably less than 1.000.

## EXAMPLE III

### Deicer Solution Evaporation Rates

The deicer $Mg(Ac)_2 \cdot 4H_2O \cdot 4CH_3OH$ was compared with methanol. Liquids were placed in wide-mouth jars in equal volumes, and such that the air/liquid interfacial areas were about equal for the two deicers. One experiment was done at room temperature (20°C) and another at -1°C. In the latter case, the two open vessels were stored in the same sealed gallon can which contained a liberal amount of Drierite.

Jars were sealed and weighed periodically, then opened again for continuing storage. Storage, for both experimental temperatures, was for at least 21 hours.

| Results: | | |
|---|---|---|
| Average Evaporation Rate, grams/minute | | |
| | 20°C | -1°C |
| Methanol ($CH_3OH$) | 0.004 | 0.0019 |
| $Mg(Ac)_2 \cdot 4H_2O \cdot 4CH_3OH$ | 0.002 | 0.00097 |

At each temperature, the rate of evaporation of (essentially) methanol was twice over methanol what it was over the deicer of this invention. Also, for each deicer the rate was twice at room temperature that of -1°C.

Incidentally, the viscosity of the $Mg(Ac)_2.4H_2O.4CH_3OH$ solution increased markedly in going from 20°C to -1°C, but it was not measured. No change could be observed in $CH_3OH$ viscosity over that temperature range. (Likewise with ethylene glycol). This increase in viscosity is evidently due to the presence of Mg-$(AC)_2$ and water, and represents a favorable feature of the product of invention. Such agents tend to "stay" where they are applied rather than "spreading" whereby they are transformed into thin layers which evaporate relatively rapidly. Thus, increased viscosity is indirectly a factor in slowing methanol losses from the application site through evaporation.

## EXAMPLE IV

### Outdoor Anti-icing

Anti-icer liquid having the composition $Mg(Ac)_2 \cdot 4H_2O \cdot 4CH_3OH$ was equilibrated in a closed container outdoors, along with a closed container of methanol. Also equilibrated outdoors were flat glass dishes with straight 1.27cm. sides, and 8.9cm. inner diameters. A laboratory balance was also equilibrated. The work area was shaded from the sun, and protected from wind. Over the course of the 4-hour experiment temperature rose from 0° to 2°C. Relative humidity ranged from 61 to 63%.

4.54 grams of anti-icer was poured into a dish. It made a puddle 3.8 cm. in diameter and 0.3 cm thick. In 104 minutes the puddle lost 70 mg, or 1.5% of its original weight, then lost no more weight. A definite skin was observed at the puddle/air interface. This skin was resilient, and dry to the touch.

By contrast, the methanol spread to the limits of the dish, or 8.9 cm in diameter. 4.71 gm of methanol was used. It lost weight at a fairly constant rate of 33 mg/minute throughout the course of the experiment (methanol was replenished).

Thus, after limited exposure to outdoor air, the anti-icer of this invention effectively sealed itself off from further (methanol) evaporation after a small initial loss. Anti-icer applied to dry pavement prior to snowfall or freezing rain would therefore be expected to remain in place to do its ultimate ice-melting job. Anti-icer spills onto dry surfaces would likewise seal themselves off thereby reducing the flammability hazard dramatically.

Results contrast with those of Example III, where the same anti-icer liquid continued to lose weight, i.e., apparently without sealing itself off. The explanation is that in Example III the liquid was contained in a tall jar where methanol (and/or water) vapor pressure over the liquid was sufficiently high that an impermeable skin did not form. In other words, the immediate atmosphere was not correct for drying of the liquid surface so that the skin could form.

### Example V

An early morning experiment was carried out at an outdoor temperature of -1°C. The test area was shaded from direct sunlight throughout the test. A level asphalt pavement test area was selected, which had a uniform ice layer of 0.48 cm.

The deicer $Mg(Ac)_2 \cdot 4H_2O \cdot 4CH_3OH$ was tested side by side with methanol, but at such a distance apart that the applied liquid areas did not overlap. Deicer liquids were first temperature-equilibrated in closed containers.

Equiosmolar quantities of methanol and of the deicer of this invention were applied to the ice. The methanol immediately spread to form a large circular lake, and evaporation was evident. The acetate deicer, already a viscous liquid, took approximately one minute to attain its largest spread area. This area was not circular, and it measured approximately 10% of the methanol lake area.

One hour later, the methanol lake became a slush. Penetration to the asphalt had not occurred. The appearance of the acetate puddle remained unchanged, but it had penetrated through to the asphalt.

In another hour the methanol lake had re-frozen. The acetate puddle remained liquid through to the asphalt.

Several hours later the situation had been found to be unchanged. This illustrates the temporary ice-melting effect of methanol, in contrast to the permanent effect of $Mg(Ac)_2 \cdot 4H_2O \cdot 4CH_3OH$ liquid.

### EXAMPLE VI

### Compositional Boundaries

I have determined one preferred embodiment of range of compositions for the $Mg(Ac)_2$/Methanol/Water system to be bounded by the following points:

|  | % Mg(Ac)₂ | % H₂0 | % of Methanol |
|---|---|---|---|
| Point 1 | ~ 9.0 | ~ 4.5 | ~86.9 |
| Point 2 | ~51.5 | ~26.1 | ~22.2 |
| Point 3 | ~ 6.9 | ~90.0 | ~ 3.2 |

wherein the points are plotted on a planar triangular diagram. This region is shown in Figure 1 and is labelled "Region I'". This region happens to be triangular, being bounded by straight lines connecting only three points.

## EXAMPLE VII

### Compositional Boundaries

I have additionally determined another preferred embodiment of the invention to be described by the area bounded by straight lines connecting the following points:

|  | % Mg(Ac)₂ | % H₂0 | % of Methanol |
|---|---|---|---|
| Point 1 | ~ 9.0 | ~ 4.5 | ~86.9 |
| Point 2 | ~52.5 | ~19.4 | ~28.1 |
| Point 3 | ~ 6.9 | ~90.0 | ~ 3.2 |
| Point 4 | ~49.8 | ~46.9 | ~ 3.2 |

wherein the points are plotted on a planar triangular diagram such as the one shown in Fig. 1. This region is tetrahedral, bounded as it is by four straight lines.

## EXAMPLE VIII

Finely divided ore containing active MgO was reacted with acetic acid, water and methanol. First, a slurry of MgO, methanol and water was prepared, and glacial acetic acid was slowly added to the slurry with agitation. Reaction exotherm was noted. System was sealed and soaked at 55°C for an hour. The result, when cooled, was viscous liquor containing insoluble particles originally emanating from the ore. Such a liquor functioned as a deicer/anti-icer when applied to snow-packed, or to bare pavement surfaces.

The range of proportions of the reactants is represented by the reaction equation:

$$MgO + 2HAc + x H_2O + yCH_3OH \rightarrow Mg(Ac)_2 \cdot (1+x)H_2O \cdot yCH_3OH$$

wherein (1 + x) ranged from 4 to 103, and y ranged from 2.1 to 42.9.

Aqueous acetic acid may replace glacial acetic acid within the limits set by the above coefficients. Likewise, aqueous methanol may substitute for anhydrous methanol, so long as the overall water balance described by the above coefficients is maintained.

The deicer liquids of this invention can be manufactured from MgO-containing ore which also contains a limited amount of active CaO. The corresponding calcium acetate is less soluble in these liquids than is magnesium acetate. The excess calcium acetate (hydrate) can be filtered off, to provide a clear liquid product. Inasmuch as calcium acetate removal represents a waste of expensive acetic acid, this variant is applicable only to systems which contain limited amounts of CaO relative to MgO. Direct slurries of the present invention can, of course, contain considerably higher concentrations of calcium acetate.

The acetic acid used in deicer manufacture need not be pure. It can be an aqueous by-product of acetominophen manufacture, for example. Filtration is applied to remove unwanted insolubles, to yield a clear deicer product liquid. The acid can also be the complex product of bacterial fermentation, containing as it does a mixture of carboxylic acids along with sugars and other by-products. Again, the process of this invention can utilize such impure acid, where final filtration can be applied to remove relatively insoluble carboxylates, and other insolubles.

The solutions of the present invention find application in other areas, in addition to deicing fluids. They can be added to cooling systems where freeze-retarding substances are required, such as for automotive and stationary engines. They can also be used as heat transfer fluids designed to operate well below the freezing point of water. By varying the water and alcohol contents of these novel $Mg(Ac)_2$-containing liquids a wide range of densities, viscosities and flash points can be obtained to suit application needs. Corrosion inhibitors may also be added to these novel liquids in order to expand their utility.

Other devices can be added to the 3-component compositions of the present invention, to bring about added benefits. For example, if some of the methanol were to be replaced by ethylene glycol, the flammability of the deicer would be reduced, and its evaporation loss upon application would be reduced. On the other hand, this substitution would increase the cost of the deicer. I have found, for example, that at least 50% of the methanol in the various $Mg(Ac)_2$/Methanol/Water compositions can be replaced by ethylene glycol. For instance, I have prepared the liquid having the composition $Mg(Ac)_2 \cdot 4 H_2O \cdot 3.04C_2H_6O_2$.

Graphically, the $Mg(Ac)_2$/Methanol/Water system is represented on standard planar triangular graph paper commonly used to represent equilibrium phase data for 3-component systems. Each apex of the triangle represents 100% of one of the components. An opposite base of the triangle represents 0% of that component. An example is given in Fig. I. The closed region depicted in the figure represents one of the preferred claimed compositions-of-matter of the present invention.

Although this invention has been described in connection with specific forms thereof, it will be appreciated by those skilled in the art that a wide variety of equivalents may be substituted for these specific elements and steps of operation shown and described herein, that certain features may be used independently of other features, and that parts may be reversed, all without departing from the spirit and scope of this invention as defined in the appended claims.

## Claims

1/ Deicing/anti-icing agents comprising magnesium acetate, methanol and water.

2/ Deicing/anti-icing agents according to claim 1, wherein agents are liquid in form.

3/ Deicing/anti-icing agents according to claim 1, whose compositions fall within the planar triangular diagram (tetrahedral) region bounded by straight lines connecting the following compositional points :

|         | % $Mg(Ac)_2$ | % $H_2O$ | % of Methanol |
|---------|--------------|----------|---------------|
| Point 1 | ~ 9.0        | ~ 4.5    | ~86.9         |
| Point 2 | ~52.5        | ~19.4    | ~28.1         |
| Point 3 | ~ 6.9        | ~90.0    | ~ 3.2         |
| Point 4 | ~49.8        | ~46.9    | ~ 3.2         |

4/ Deicing/anti-icing agents of claim 3, wherein up to 50 % of the molar concentration of methanol contained therein is replaced by ethylene glycol.

5/ Deicing/anti-icing agents according to claim 1, whose compositions fall within the planar triangular diagram (triangular) region bounded by straight lines connecting the following compositional points :

|         | % $Mg(Ac)_2$ | % $H_2O$ | % of Methanol |
|---------|--------------|----------|---------------|
| Point 1 | ~ 9.0        | ~ 4.5    | ~86.9         |
| Point 2 | ~51.5        | ~26.1    | ~22.2         |
| Point 3 | ~ 6.9        | ~90.0    | ~ 3.2         |

6/ Deicing/anti-icing agents of claim 4, wherein up to 50 % of the molar concentration of methanol contained therein is replaced by ethylene glycol.

7/ The process for manufacturing $Mg(Ac)_2$/Methanol/Water deicing/anti-icing agents according to any claims 1 to 6, which comprises neutralizing acetic acid with active $MgO$ in a medium of methanol/water.

8/ The process for manufacturing $Mg(Ac)_2$/Methanol/Water deicing/anti-icing agents according to claim 7 according to the following reaction formula :

$$MgO + 2HAc + xH_2O + yCH_3OH \rightarrow Mg(Ac)_2 \cdot (1+x)H_2O \cdot yCH_3OH$$

wherein :

. $(1+x)$ is ranged from 4 to 103, and

. y is ranged from 2.1 to 42.9.

9/ The process according to claim 8, wherein x equals 3 and y equals 4.

A – 100% $MgAc_2$

B – 100% $H_2O$

C – 100% MeOH

REGION I′

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-3 434 953 (VOGEL)<br>* Claims; pages 2-3 *<br>--- | 1-4 | C 09 K 5/00<br>C 09 K 3/18 |
| Y | DERWENT FILE SUPPLIER JAPS, Patent Office of Japan, Tokyo, JP; & JP-A-63 097 683 (CHUO RIKEN K.K.)<br>* Whole abstract *<br>--- | 1-4 | |
| A | EP-A-0 164 622 (GESELLSCHAFT FÜR FORSCHUNG UND ENTWICKLUNG VON NEUEN BAUTECHNOLOGIEN UND BAUSTOFFEN GmbH)<br>* Examples 1,2; claims *<br>----- | 1-4 | |

TECHNICAL FIELDS SEARCHED (Int. Cl.5)

C 09 K

The present search report has been drawn up for all claims

| Place of search | Date of completion of the search | Examiner |
|---|---|---|
| THE HAGUE | 15-05-1990 | LEDER M. |

EPO FORM 1503 03.82 (P0401)